# EUROPEAN PATENT SPECIFICATION

(11) **EP 2 911 325 B1**
(45) Date of publication and mention of the grant of the patent: **14.09.2016**
(21) Application number: 14305262.9
(22) Date of filing: 25.02.2014
(51) Int. Cl.: H04J 3/14, H04J 3/16

(54) **FAST GCC FAILURE DETECTION**
SCHNELLE GCC-FEHLERDETEKTION
DÉTECTION DE DÉFAILLANCE DE GCC RAPIDE

(43) Date of publication of application: 26.08.2015
(73) Proprietor: ALCATEL LUCENT, 92100 Boulogne-Billancourt (FR)
(72) Inventor: Fritschi, Klaus, 90411 Nürnberg (DE); Thomas, Wolfgang, 90411 Nürnberg (DE)
(74) Representative: Wetzel, Emmanuelle

(56) References cited:
- EP-A1- 1 737 145
- JP-A- 2001 285 196
- US-A1- 2001 027 542
- US-A1- 2006 056 844

## Description

The present document relates to Optical Transport Networks (OTNs). In particular, the present document relates to the detection of a failure within a general communication channel of an OTN.

The communication between OTN network elements may be performed using embedded general communication channels called GCC (General Communication Channels). The OTN standards do not define any supervision for these general communication channels on the physical layer, i.e. it is assumed that either the complete signal, in which the GCCs are embedded, is impaired, or that the detection of a failure of a GCC is left to a higher communication layer (e.g. to layer 2 using PPP (Point-to-Point Protocol) or to layer 3 using OSPF (Open Shortest Path First Protocol)).

In a case where a GCC is impaired, but the server signal (e.g. an Optical channel Data Unit, ODU, comprising the GCC) is not impaired, the failure detection is typically slow (in the range of several seconds), as only the link layer or higher layer software protocols supervise the general communication channel. This can lead to slow reactions (e.g. for triggering GCC protection, or for triggering rerouting). These self healing actions should, however, be executed within relatively short time intervals (e.g. within 50 ms from the occurrence of a failure), which currently is not the case (the triggering of self healing actions currently requires in the range of several seconds from the occurrence of a failure). As a result of this, the ability of the OTN network elements (NEs) to communicate with other network components is impaired. This, however, can lead to serious problems for a control plane of the OTN, as the delay of the activation of self healing actions, such as ECC and/or rerouting, can delay network traffic restoration.

The present document addresses the above mentioned technical problems. In particular, the present document describes a method and a corresponding network element which are configured to detect an impairment of an OTN communication channel or an OTN general communication channel within a relatively short time interval.

Japanese Patent Application JP 2001 285196 A discloses an optical communication system which communicates via an optical transmission link.

The technical problems are solved by the independent claims. Preferred embodiments are described by the dependent claims.

According to an aspect, a method for detecting an impairment of a communication channel, notably a general communication channel, within an optical transport network (OTN) is described. The OTN may also be referred to as an Optical Transport Hierarchy (OTH) network. The general communication channel may be embedded within an Optical data Channel Unit (ODU) of the OTN. In particular, the general communication channel may comprise or may be a General Communication Channel (GCC) of an ODU Overhead. The general communication channel may be transmitted over a link of the OTN.

The general communication channel (also referred to as an OTN communication channel) employs the transmission of one or more pre-determined idle patterns at idle times of the general communication channel. The idle times may correspond to a time interval between the transmission of two adjacent frames or packet data units (PDUs) of the general communication channel. As such, one or more pre-determined idle patterns may be used to separate two adjacent packet data units of the general communication channel from one another. The pre-determined idle pattern typically comprises a pre-determined bit sequence. By way of example, the pre-determined bit sequence may comprise or may correspond to the bit sequence '01111110'.

The general communication channel may employ a High-Level Data Link Control (HDLC) framed data link protocol. As such, the communication may make use of the idle pattern used by the HDLC-framed protocol. In particular, the general communication channel may employ or may make use of a HDLC-framed Point-to-Point protocol (PPP).

The method comprises receiving data on the general communication channel. The data may comprise or may correspond to a sequence of bits. Furthermore, the method comprises detecting an impairment of the general communication channel by detecting that an idle pattern within the received data is absent or is corrupted. As the corruption or the absence of an idle pattern can be detected in a rapid manner, the method allows detecting impairments of the general communication channel in a rapid manner. Furthermore, the impairment of the general communication channel may be detected independently from the root cause of the failure of the general communication channel.

Detecting that an idle pattern within the received data is absent or is corrupted may comprise monitoring the received data at a time interval between two adjacent packet data units (PDUs) which are carried over the general communication channel. In other words, it may be detected whether an idle pattern within the received data at the time interval between two adjacent PDUs is corrupted (as it is known that this received data should correspond to one or more idle patterns). For this purpose, the received data at the time interval between two adjacent PDUs may be compared with the pre-determined idle pattern. In particular, it may be verified whether the received data at the time interval between two adjacent PDUs corresponds to the idle pattern or to a sequence of idle patterns. If this is the case, it may be assumed that the general communication channel is working correctly. On this other hand, if the received data at the time interval between two adjacent PDUs does not correspond to the idle pattern or to a sequence of idle patterns, then it may be concluded that the general communication channel is impaired.

Idle patterns (also referred to as flag-bytes) may be used to indicate the beginning and/or the ending of a packet data unit (PDU). Furthermore, the idle pattern may be used to indicate pauses (between PDUs). Hence, it is to be expected that the received data comprises at least one idle pattern within a pre-determined time interval. The pre-determined time interval may depend on the temporal length of a PDU. An absence of one or more idle packets within the received data on the general communication channel for a time interval which correspond to or exceeds the pre-determined time interval may indicate an impairment of general communication channel.

As such, detecting that an idle pattern within the received data is absent or is corrupted may comprise monitoring the received data for the pre-determined time interval and determining whether the received data within the pre-determined time interval comprises at least one idle pattern. If the received data does not comprise at least one idle pattern within the pre-determined time interval, an impairment of the general communication channel is detected, i.e. it is detected that an idle pattern within the received data is absent or is corrupted. Hence, an impairment of the general communication channel may be detected within the pre-determined time interval (which typically corresponds to the temporal length of a PDU). For monitoring different time intervals of the received data a moving analysis window may be used. The moving analysis window may have a temporal length which corresponds to the temporal length of the pre-determined time interval.

The method may further comprise triggering a protection and/or rerouting mechanism for the general communication channel, subject to detecting an impairment of the general communication channel. As a result of this, the effects of an impairment, e.g. the effects of a control plane of the OTN, can be remediated in a rapid manner.

According to a further aspect, a network element for an optical transport network (OTN) is described. The network element is configured to receive data on a general communication channel of the OTN. The general communication channel typically employs the transmission of one or more pre-determined idle patterns at idle times of the general communication channel. Furthermore, the network element is configured to detect an impairment of the general communication channel by detecting that an idle pattern within the received data is absent or is corrupted.

According to a further aspect, an optical transport network comprising a plurality of network elements is described. One or more of the network elements may be configured in accordance to the network element described in the present document.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein
Fig. 1 shows the hierarchy for encapsulating an SDH signal into an OTH or OTN signal;
Fig. 2a, Fig. 2b shows the structure of an OTH or OTN optical channel data unit;
Fig. 3 shows a flow chart of an example method for detecting an impairment of a general communication channel of an OTN;
Fig. 4 shows a block diagram of an example OTN; and
Fig. 5a shows a block diagram of an example OTN network element; and
Fig. 5b illustrates example data of a general communication channel.

As outlined above, the present document addresses the technical problem of fast impairment detection within a general communication channel, notably within a GCC, of an OTN. An OTN may be used to transport various different types of data traffic (also referred to as client signals) over a DWDM (Dense Wavelength Division Multiplex) network in a transparent manner. This transparent transport method has been defined in the ITU-T recommendation G.709 and is also known as Optical Transport Hierarchy (OTH). OTH is positioned as a server layer for various client signals, e.g. SDH/SONET, ATM and/or Ethernet. The frame structure defined in G.709 comprises four parts:
1. the optical packet payload unit (OPUk), where the payload is mapped into;
2. the Optical channel Data Unit (ODUk), which contains the OPUk and additional overhead bytes (referred to the ODU overhead) which have particular services and functions attached to them; The ODU overhead typically comprises one or more general communication channels;
3. the optical transport unit (OTUk), which contains the ODUk plus additional framing bytes; and
4. a forward error correction (FEC) code.

It is to be noted that the parameter k represents the line rate of the OTH, i.e. k = 1 stands for approx. 2.6 Gb/s, k = 2 for approx. 10.7 Gb/s and k = 3 for approx. 43 Gb/s. The different ODUs are able to transport e.g. STM-16, STM-64 and STM-256 signals, respectively.

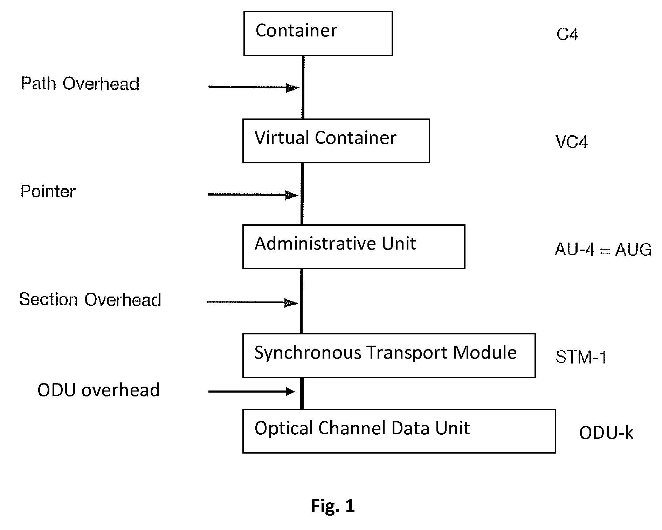

As an example, Fig. 1 illustrates the encapsulation hierarchy when transporting SDH signals over OTH. It should be noted that the impairment detection schemes described in the present document are independent of the type of data which is encapsulated within the ODU containers. Data units, e.g. from ATM signals, are carried in containers. After adding the path overhead (POH), the containers are called virtual containers (VC), in case of STM-1 a VC4. Large virtual containers, i.e. VC3 and VC4, are also referred to as high order virtual containers (HOVC). The AU pointer indicates the beginning of such a VC4 within the STM-1 payload and the combination of AU pointer and VC4 is called an Administrative Unit (AU). After adding the section overhead one obtains the synchronous transport module (STM). As defined in OTH, such STMs may be encapsulated into ODUs by adding the ODU overhead. The mechanism of mapping payload into an ODU is also referred to as User Network Interface (OTH-UNI) or as digital wrapping.

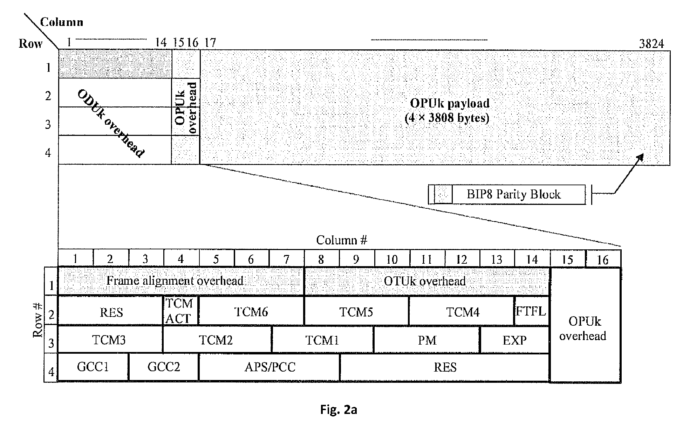

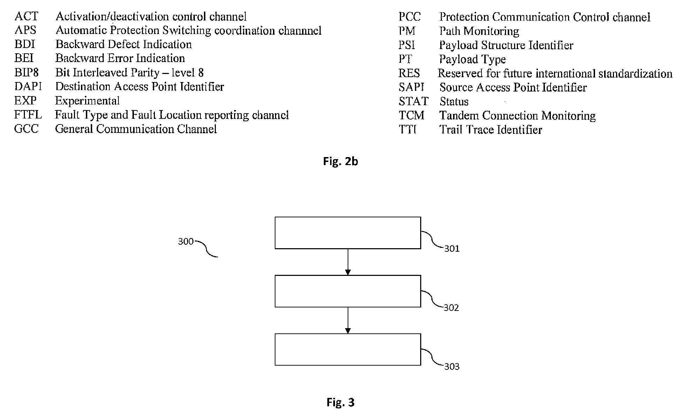

Fig. 2a, Fig. 2b shows the structure of an ODUk overhead as currently specified by ITU-T G.709. Similar to the overhead bytes known from SDH, the ODUk overhead bytes are used to provide services within an OTH network. Example ODU overhead bytes provide
- General Communication Channels (GCC1 and GCC2) for providing information or requests to the control plane and for enabling a communication between different OTN network elements;
- Automatic Protection Switching coordination channel (APS) and/or Protection Communication Control channel (PCC) for providing switching capabilities at the OTH level;
- Bytes related to signaling faults within an OTH network, such as the Fault Type and Fault Location reporting channel (FTFL).

Within the G.709 specification, these bytes or channels are mainly used for services on the OTH network level. The OTH network is therefore transparent with respect to the client signals, such as SDH or Ethernet.

As outlined above, the OTH or OTN standards do not specify a mechanism for detecting an impairment of channels within the ODUk overhead, notably within the GCCs. A GCC failure therefore needs to be detected by monitoring the quality of the server signal (i.e. of the ODUs as a whole) and/or by higher layer networking protocols, such as PPP and OSPF. As a result of this, failure detection within the GCCs is delayed.

The standard (notably ITU-T G.7712) defines that GCCs use HDLC-framed PPP (as defined in RFC 1662) as a data link protocol. PPP makes use of PPP frames comprising a protocol field and an information field. In case of HDLC-framed PPP, the framing mechanism of the synchronous data link layer protocol High-Level Data Link Control (HDLC) is used, which enables the resulting HDLC frames to be transmitted over synchronous or asynchronous links. This is achieved by using a frame delimiter, or flag, which comprises a unique sequence of bits that is guaranteed not to be comprised within a HDLC frame. In a preferred example, this frame delimiter sequence is '01111110', or, in hexadecimal notation, 0x7E.

Each HDLC frame begins and ends with a frame delimiter. A frame delimiter at the end of a frame may also mark the start of the next frame. When no frames are being transmitted (notably on a simplex or full-duplex synchronous link), a frame delimiter may be transmitted continuously on the link.

In other words, in order to separate PDUs (packet data units) or frames, so called flag-sequences or frame delimiter sequences are sent. These flag-sequences are typically also sent in idle times. Consequently, the absence or corruption of flag-sequences may be used as an indicator that the corresponding GCC has failed. In other words, it is proposed in the present document to enable a network element to monitor the flag-sequences between PDUs on a GCC of an OTN. If it is detected that a received flag-sequence differs from the pre-determined structure, this may be taken as an indication for the fact that the GCC has failed. This detection works fast, reliable, and independent of the root cause of the GCC failure, such as a server signal failure, a corruption of the GCC connection, or a GCC source failure.

In reaction to the detection of a GCC failure, counter-measures, such as the triggering of ECC and/or the triggering of rerouting mechanisms, may be initiated by the network element.

It should be noted that even though the present document focuses on the detection of a GCC failure, the failure detection mechanism which is described in the present document may be applied to general types of networking interfaces, which make use of the transmission of pre-determined idle patterns.

Fig. 3 shows a flow chart of an example method 300 for detecting an impairment of a general communication channel within an optical transport network (OTN). The general communication channel may be a logical communication channel. The general communication channel employs the transmission of one or more pre-determined idle patterns at idle times of the general communication channel. The method 300 comprises receiving 301 data on the general communication channel. Furthermore, the method 300 comprises detecting 302 an impairment of the general communication channel by detecting that an idle pattern within the received data is absent or is corrupted. For this purpose, the received data may be compared with the pre-determined idle pattern and it may be verified whether the received data comprises a segment which corresponds to the pre-determined idle pattern. If such a segment cannot be identified, it may be detected that an idle pattern within the received data is absent or is corrupted.

In particular, the received data subsequent to a first PDU and prior to a second PDU may be analyzed. The first and second PDUs may be directly adjacent to one another within a sequence of PCUs. It is expected that the data between the first PDU and the second PDU corresponds to one or more identical idle patterns. If it is detected that this is not the case, then this provides an indication for the fact that the general communication channel is impaired.

The method 300 may further comprise triggering 303 a protection and/or rerouting mechanism for the general communication channel, subject to detecting an impairment of the general communication channel. By doing this, the effects of the impairment of the general communication channel can be eliminated in a rapid manner.

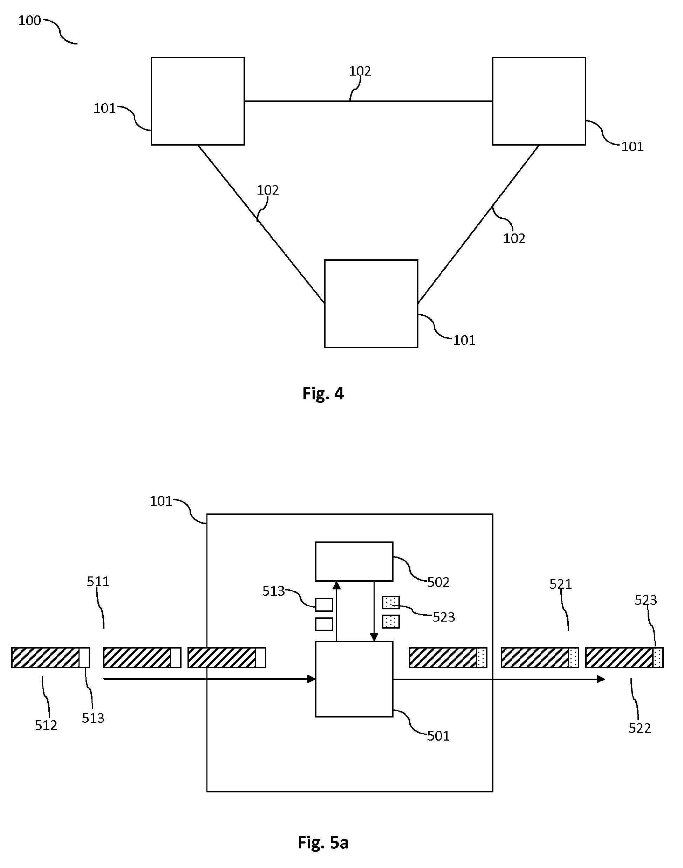

Fig. 4 shows a block diagram of an example optical transport network 100. The OTN 100 comprises a plurality of network elements 101 which are coupled with one another via communication links 102. The communication links 102 may be used to carry the optical channel data units (ODUs) described in the present document.

A network element 101 of the optical transport network 100 may be configured to receive data on a general communication channel of the OTN 100. The general communication channel may be embedded within the ODUs carried on the communication links 102. The general communication channel may employ the transmission of one or more pre-determined idle patterns at idle times of the general communication channel. The network element 101 may be configured to detect an impairment of the general communication channel by detecting that an idle pattern within the received data is absent or is corrupted. As a result of this, impairments of the general communication channel may be detected in a rapid manner.

Fig. 5a shows a block diagram of an example network element 101. The network element 101 comprises an add-drop unit 501 configured to extract one or more incoming general communication channels 513 from the incoming ODUs 512 of a sequence 513 of incoming ODUs. The extracted (i.e. dropped) general communication channels 513 may be passed to a processing unit 502. The processing unit 502 may be configured to detect an impairment of the general communication channel based on the data carried on the one or more general communication channels 513. The add-drop unit 501 may be further configured to add one or more outgoing general communication channels 523 to the outgoing ODUs 522 of a sequence 521 of outgoing ODUs. The data carried on an outgoing general communication channel 523 may differ from the data carried on an incoming general communication channel 513.

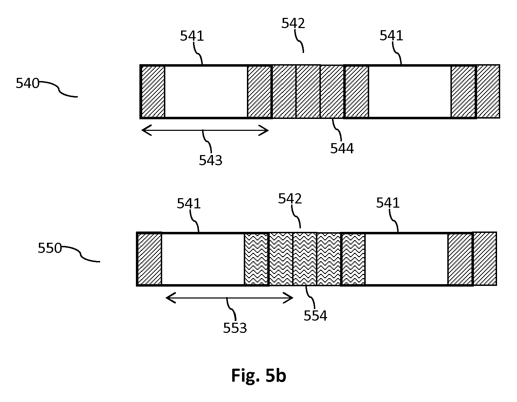

Fig. 5b illustrates data 540, 550 carried on a general communication channel. As outlined above, payload data is typically carried within so called packet data units 541. The packet data units 541 may comprise one or more flag-bytes or idle patterns 544 which may indicate the beginning and/or the ending of a packet data unit 541. Pauses between packet data units 541 are typically filled with a sequence of one or more idle patterns 544.

The processing unit 502 of a network element 101 may be configured to monitor the received data 540, 550 of a general communication channel within a time interval or analysis window 543. The time interval 543 may be used for a moving analysis window. In other words, the processing unit 502 may be configured to monitor the received data 540, 550 within a moving analysis window having a length which corresponds to the time interval 543. The time interval 543 may correspond to the temporal length of a PDU 541. The received data 540 in the upper part of Fig. 5b is valid and it can be seen that the moving analysis window always comprises at least one valid idle pattern 544. On the other hand, the received data 550 in the lower part of Fig. 5b is partially corrupted. In particular, the received data 550 comprises corrupted idle patterns 554 which differ from the valid idle patterns 544. It can be seen that the received data 550 within the analysis window 553 does not comprise any valid idle patterns 554. This indicates to the processing unit 502 that the received data 50 and the general communication channel are impaired. As illustrated by Fig. 5b, the impairment detection can be performed in a rapid manner.

By using the method described in the present document, GCC failures can be detected faster than when using higher layer software protocol failure detection schemes. This allows reducing the time for triggering GCC protection/rerouting actions from several seconds down to the 10 ms range. This is particularly beneficial for OTNs which operate a control plane, as the control plain typically requires the GCC communication to be restored rapidly.

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some examples are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The examples are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (300) for detecting an impairment of a general communication channel (513) within an optical transport network, OTN (100); wherein the general communication channel (513) employs the transmission of one or more pre-determined idle patterns (544) at idle times of the general communication channel (513); wherein the method (300) comprises
- receiving (301) data (540, 550) on the general communication channel (513); and
- detecting (302) an impairment of the general communication channel (513) by detecting that an idle pattern (544) within the received data (540, 550) is absent or is corrupted;
wherein detecting that an idle pattern (544) within the received data (540, 550) is absent or is corrupted comprises monitoring the received data (540, 550) at a time interval between two adjacent packet data units (541), PDUs, carried over the general communication channel (513) and comparing the received data (540, 550) with the pre-determined idle pattern (544).

2. The method (300) of claim 1, wherein the general communication channel (513) is a General Communication Channel, GCC, of an Optical channel Data Unit, ODU, Overhead.

3. The method (300) of any previous claim, wherein the general communication channel (513) employs a High-Level Data Link Control, HDLC, framed data link protocol.

4. The method (300) of claim 3, wherein the general communication channel (513) employs a HDLC-framed Point-to-Point protocol, PPP.

5. The method (300) of any previous claim, wherein the pre-determined idle pattern (544) comprises a pre-determined bit sequence.

6. The method (300) of claim 5, wherein the pre-determined bit sequence comprises the bit sequence '01111110'.

7. The method (300) of any previous claim, further comprising verifying whether the received data (540, 550) at the time interval between two adjacent PDUs (541) corresponds to the idle pattern (544) or to a sequence of idle patterns (544).

8. The method (300) of any previous claim, wherein detecting that an idle pattern (544) within the received data (540, 550) is absent or is corrupted comprises
- monitoring the received data (540, 550) for a pre-determined time interval (543, 553);
- determining whether the received data (540, 550) within the pre-determined time interval (543, 553) comprises at least one idle pattern (544); and
- detecting that an idle pattern (544) within the received data is absent or is corrupted, if the received data (540, 550) does not comprise at least one idle pattern (544) within the pre-determined time interval (543, 553).

9. The method (300) of any previous claim, further comprising, subject to detecting an impairment of the general communication channel (513), triggering (303) a protection and/or rerouting mechanism for the general communication channel (513).

10. The method (300) of any previous claim, wherein one or more pre-determined idle patterns (544) are used to separate two packet data units (541), PDUs, of the general communication channel (441) from one another.

11. The method (300) of any previous claim, wherein the general communication channel (513) is transmitted over a link (102) of the OTN (100).

12. A network element (101) for an optical transport network, OTN, (100) wherein the network element (101) is configured to
- receive data (540, 550) on a general communication channel (513) of the OTN (100); wherein the general communication channel (513) employs the transmission of one or more pre-determined idle patterns (544) at idle times of the general communication channel (513); and
- detect an impairment of the general communication channel (513) by detecting that an idle pattern (544) within the received data (540, 550) is absent or is corrupted,
wherein detecting that an idle pattern (544) within the received data (540, 550) is absent or is corrupted comprises monitoring the received data (540, 550) at a time interval between two adjacent packet data units (541), PDUs, carried over the general communication channel (513) and comparing the received data (540, 550) with the pre-determined idle pattern (544).

13. An optical transport network (100) comprising a plurality of network elements (101), wherein at least one of the network elements (101) is according to claim 12.

## Patentansprüche

1. Verfahren (300) zum Erkennen einer Beeinträchtigung eines allgemeinen Kommunikationskanals (513) innerhalb eines optischen Transportnetzes, OTN (100); wobei der allgemeine Kommunikationskanal (513) die Übertragung von einem oder mehreren vorbestimmten Leerlaufmustern (544) zu Leerlaufzeiten des allgemeinen Kommunikationskanals (513) verwendet; wobei das Verfahren (300) umfasst
- Empfangen (301) von Daten (540, 550) auf dem allgemeinen Kommunikationskanal (513); und
- Erkennen (302) einer Beeinträchtigung des allgemeinen Kommunikationskanals (513) durch Erkennen, dass ein Leerlaufmuster (544) innerhalb der empfangenen Daten (540, 550) fehlt oder beschädigt ist;
wobei das Erkennen, dass ein Leerlaufmuster (544) innerhalb der empfangenen Daten (540, 550) fehlt oder beschädigt ist, ein Überwachen der empfangenen Daten (540, 550) in einem Zeitintervall zwischen zwei benachbarten Paketdateneinheiten (541), PDUs, die über den allegemeinen Kommunikationskanal (513) transportiert werden, und ein Vergleichen der empfangenen Daten (540, 550) mit dem vorbestimmten Leerlaufmuster (544) umfasst.

2. Verfahren (300) nach Anspruch 1, wobei der allgemeine Kommunikationskanal (513) ein Allgemeiner Kommunikationskanal, GCC, einer optischen Kanaldateneinheit, ODU, Overhead ist.

3. Verfahren (300) nach irgendeinem der vorhergehenden Ansprüche, wobei der allgemeine Kommunikationskanal (513) ein Datenverbindungsprotokoll mit High-Level Data Link Control, HDLC-Rahmen, verwendet.

4. Verfahren (300) nach Anspruch 3, wobei der allgemeine Kommunikationskanal (513) ein Punkt-zu-Punkt-Protokoll, PPP, mit HDLC-Rahmen verwendet.

5. Verfahren (300) nach irgendeinem der vorhergehenden Ansprüche, wobei das vorbestimmte Leerlaufmuster (544) eine vorbestimmte Bitsequenz umfasst.

6. Verfahren (300) nach Anspruch 5, wobei die vorbestimmte Bitsequenz die Bitsequenz '01111110' umfasst.

7. Verfahren (300) nach irgendeinem der vorhergehenden Ansprüche, weiter umfassend das Prüfen, ob die empfangenen Daten (540, 550) im Zeitintervall zwischen zwei benachbarten PDUs (541) dem Leerlaufmuster (544) oder einer Sequenz von Leerlaufmustern (544) entsprechen.

8. Verfahren (300) nach irgendeinem der vorhergehenden Ansprüche, wobei das Erkennen, dass ein Leerlaufmuster (544) innerhalb der empfangenen Daten (540, 550) fehlt oder beschädigt ist, umfasst
- Überwachen der empfangenen Daten (540, 550) während eines vorbestimmten Zeitintervalls (543, 553);
- Erkennen, ob die empfangenen Daten (540, 550) innerhalb des vorbestimmten Zeitintervalls (543, 553) mindestens ein Leerlaufmuster (544) umfassen; und
- Erkennen, dass ein Leerlaufmuster (544) innerhalb der empfangenen Daten fehlt oder beschädigt ist, wenn die empfangenen Daten (540, 550) nicht mindestens ein Leerlaufmuster (544) innerhalb des vorbestimmten Zeitintervalls (543, 553) aufweisen.

9. Verfahren (300) nach irgendeinem der vorhergehenden Ansprüche, weiterhin umfassend, vorbehaltlich eines Erkennens einer Beeinträchtigung des allgemeinen Kommunikationskanals (513),
Auslösen (303) eines Schutz- und/oder Umleitungsmechanismus für den allgemeinen Kommunikationskanal (513).

10. Verfahren (300) nach irgendeinem der vorhergehenden Ansprüche, wobei ein oder mehrere vorbestimmte Leerlaufmuster (544) verwendet werden, um zwei Paketdateneinheiten (541), PDUs, des allgemeinen Kommunikationskanals (441) voneinander zu trennen.

11. Verfahren (300) nach irgendeinem der vorhergehenden Ansprüche, wobei der allgemeine Kommunikationskanal (513) über eine Verbindung (102) des OTN (100) übertragen wird.

12. Netzwerkelement (101) für ein optisches Transportnetz, OTN, (100) wobei das Netzwerkelement (101) konfiguriert ist zum
- Empfangen von Daten (540, 550) auf einem allgemeinen Kommunikationskanal (513) des OTN (100); wobei der allgemeine Kommunikationskanal (513) die Übertragung von einem oder mehreren vorbestimmten Leerlaufmustern (544) zu Leerlaufzeiten des allegemeinen Kommunikationskanals (513) verwendet; und
- Erkennen einer Beeinträchtigung des allgemeinen Kommunikationskanals (513) durch Erkennen, dass ein Leerlaufmuster (544) innerhalb der empfangenen Daten (540, 550) fehlt oder beschädigt ist,
wobei das Erkennen, dass ein Leerlaufmuster (544) innerhalb der empfangenen Daten (540, 550) fehlt oder beschädigt ist, ein Überwachen der empfangenen Daten (540, 550) in einem Zeitintervall zwischen zwei benachbarten Paketdateneinheiten (541), PDUs, die über den allgemeinen Kommunikationskanal (513) transportiert werden, und ein Vergleichen der empfangenen Daten (540, 550) mit dem vorbestimmten Leerlaufmuster (544) umfasst.

13. Optisches Transportnetz (100), umfassend eine Vielzahl von Netzwerkelementen (101), wobei mindestens eins der Netzwerkelemente (101) Anspruch 12 entspricht.

## Revendications

1. Procédé (300) de détection d'une dégradation d'un canal de communication général (513) au sein d'un réseau de transport optique, OTN (100) ; dans lequel le canal de communication général (513) utilise la transmission d'un ou de plusieurs motifs inactifs prédéterminés (544) pendant des temps morts du canal de communication général (513) ; le procédé (300) comprenant les étapes suivantes
- recevoir (301) des données (540, 550) sur le canal de communication général (513) ; et
- détecter (302) une dégradation du canal de communication général (513) en détectant qu'un motif inactif (544) dans les données reçues (540, 550) est absent ou est altéré ;
dans lequel détecter qu'un motif inactif (544) dans les données reçues (540, 550) est absent ou altéré consiste à surveiller les données reçues (540, 550) à un intervalle de temps entre deux unités de données par paquet (541), PDU, adjacentes transportées sur le canal de communication général (513) et à comparer les données reçues (540, 550) au motif inactif (544) prédéterminé.

2. Procédé (300) selon la revendication 1, dans lequel le canal de communication général (513) est un canal de communication général, GCC, d'un surdébit d'unité de données de canal optique, ODU.

3. Procédé (300) selon l'une quelconque des revendications précédentes, dans lequel le canal de communication général (513) utilise un protocole de liaison de données à trames de commande de liaison de données de haut niveau, HDLC.

4. Procédé (300) selon la revendication 3, dans lequel le canal de communication général (513) utilise un protocole point à point, PPP, à trames HDLC.

5. Procédé (300) selon l'une quelconque des revendications précédentes, dans lequel le motif inactif (544) prédéterminé comprend une séquence de bits prédéterminée.

6. Procédé (300) selon la revendication 5, dans lequel la séquence de bits prédéterminée comprend la séquence de bits '01111110'.

7. Procédé (300) selon l'une quelconque des revendications précédentes, consistant en outre à vérifier si les données reçues (540, 550) à l'intervalle de temps entre deux PDU (541) adjacentes correspondent au motif inactif (544) ou à une séquence de motifs inactifs (544).

8. Procédé (300) selon l'une quelconque des revendications précédentes, dans lequel détecter qu'un motif inactif (544) dans les données reçues (540, 550) est absent ou est altéré comprend les étapes suivantes
- surveiller les données reçues (540, 550) pendant un intervalle de temps prédéterminé (543, 553) ;
- déterminer si les données reçues (540, 550) dans l'intervalle de temps prédéterminé (543, 553) comprennent au moins un motif inactif (544) ; et
- détecter qu'un motif inactif (544) dans les données reçues est absent ou est altéré, si les données reçues (540, 550) ne comprennent pas au moins un mode inactif (544) dans l'intervalle de temps prédéterminé (543, 553).

9. Procédé (300) selon l'une quelconque des revendications précédentes, comprenant en outre, sous réserve de la détection d'une dégradation du canal de communication général (513), le déclenchement (303) d'un mécanisme de protection et/ou de réacheminement pour le canal de communication général (513).

10. Procédé (300) selon l'une quelconque des revendications précédentes, dans lequel un ou plusieurs motifs inactifs (544) prédéterminés sont utilisés pour séparer l'une de l'autre deux unités de données par paquet (541), PDU, du canal de communication général (441).

11. Procédé (300) selon l'une quelconque des revendications précédentes, dans lequel le canal de communication général (513) est transmis sur une liaison (102) du OTN (100).

12. Élément de réseau (101) pour un réseau de transport optique, OTN, (100) dans lequel l'élément de réseau (101) est configuré pour
- recevoir des données (540, 550) sur un canal de communication général (513) de l'OTN (100) ; dans lequel le canal de communication général (513) utilise la transmission d'un ou de plusieurs motifs inactifs (544) prédéterminés pendant des temps morts du canal de communication général (513) ; et
- détecter une dégradation du canal de communication général (513) en détectant qu'un motif inactif (544) dans les données reçues (540, 550) est absent ou est altéré,
dans lequel détecter qu'un motif inactif (544) dans les données reçues (540, 550) est absent ou altéré consiste à surveiller les données reçues (540, 550) à un intervalle de temps entre deux unités de données par paquet (541), PDU, adjacentes transportées sur le canal de communication général (513) et à comparer les données reçues (540, 550) au motif inactif (544) prédéterminé.

13. Réseau de transport optique (100) comprenant une pluralité d'éléments de réseau (101), dans lequel au moins un des éléments de réseau (101) est selon la revendication 12.
